(19) Europäisches Patentamt
European Patent Office
Office européen des brevets

(11) Veröffentlichungsnummer : **0 069 278**
**B1**

(12) # EUROPÄISCHE PATENTSCHRIFT

(45) Veröffentlichungstag der Patentschrift : **16.04.86**

(51) Int. Cl.[4] : **C 08 K 5/37**, C 08 K 5/51, C 08 L 9/02

(21) Anmeldenummer : **82105518.3**

(22) Anmeldetag : **23.06.82**

(54) **Verwendung von Zinksalzen des Mercaptobenzimidazols und Dithiophosphorsäureesters bei der Herstellung von Nitrilkautschuk-Polyvinylchlorid-Abmischungen.**

(30) Priorität : **04.07.81 DE 3126402**

(43) Veröffentlichungstag der Anmeldung : **12.01.83 Patentblatt 83/02**

(45) Bekanntmachung des Hinweises auf die Patenterteilung : **16.04.86 Patentblatt 86/16**

(84) Benannte Vertragsstaaten : **DE FR GB IT NL**

(56) Entgegenhaltungen :
**FR-A- 2 419 306**
**FR-A- 2 445 350**
**CHEMICAL ABSTRACTS, Band 84, Nr. 6, 9. Februar 1976, Seite 63, Nr. 32346t, Columbus Ohio (USA);**

(73) Patentinhaber : **BAYER AG**
**Konzernverwaltung RP Patentabteilung**
**D-5090 Leverkusen 1 Bayerwerk (DE)**

(72) Erfinder : **Thörmer, Joachim, Dr.**
**Emil-Nolde-Strasse 39**
**D-5090 Leverkusen (DE)**
Erfinder : **Bertram, Hans H., Dr.**
**Eulenweg 32**
**D-5653 Leichlingen (DE)**
Erfinder : **Benn, Otto, Dr.**
**Im Aehlemaar 24**
**D-5060 Bergisch Gladbach 2 (DE)**
Erfinder : **Hurnik, Helmut, Ing. grad.**
**Bonner Strasse 5**
**D-5090 Leverkusen 3 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 069 278 B1

**Beschreibung**

Die Herstellung von Polymergemischen aus Butadien-Acrylnitril-Copolymeren (im folgenden NBR genannt) und Polyvinylchlorid (im folgenden PVC genannt) oder seinen Copolymeren ist Stand der Technik und wurde zuerst von E. Konrad « Gummi »-Zeitung Nr. 13 (1936) beschrieben, ferner von Bacon und Mitarb. in « Proceedings of the Rubber Technology Conference 1938 » (S. 525-536). Das nachfolgende technische Schrifttum befaßt sich mit der Herstellung und Anwendung derartiger Polymergemische, die sowohl im unvernetzten Zustand als thermoplastische Werkstoffe als auch im vernetzten Zustand als Elastomere Anwendung finden (T.J. Sharp, J.A. Ross, Transactions of the Rubber Industry, Vol. 37, No. 5, Okt. 1961 ; C.L. Bryant, Vortrag Deutsche Kautschukgesellschaft 4.-8. Oktober 1960 in Berlin ; K.A. Pedley, Polymer Age, Vol. 1, No. 3, Mai 1970, S. 97 ff. ; T.J. Sharp. Bristisch Plastics, 1959, S. 431 ; C.Y. Almond, Transactions oft the Institution of the Rubber Industry 37, 1961, S. 85-95).

Polymerverschnitte der oben genannten Art sind in zwei besonderen Anwendungsrichtungen von Bedeutung :

a) im unvernetzten Zustand als thermoplastisch verarbeitbare Werkstoffe, wobei die eine Komponente (NBR) als schwer extrahierbarer migrationsbeständiger Polymerweichmacher oder Schlagfestmacher wirkt und PVC zumeist die mengenmäßig überwiegende Komponente darstellt,

b) im vernetzten Zustand als Elastomer, wobei die eine Komponente (PVC) zur Verbesserung der Ozon- und Wetterbeständigkeit, der Quellbeständigkeit gegen Mineralöle und Kraftstoffe und der Verbesserung des Brandschutzverhaltens dient und NBR die zumeist mengenmäßig überwiegende und vernetzbare Komponente darstellt.

Als Anwendungsbeispiele für a) seien genannt : abriebfestes, ölbeständiges Schuhwerk, Faltenbälge, Manschetten und Schläuche für die Kraftfahrzeug- und sonstige technische Industrie, Beschichtungen für Schmelzwalzen-Kalander für Bekleidungs-, Polster-, Täschner- und Schuhindustrie sowie für Folien, z. B. geschäumte und geschliffene Folien zur Erzielung von Velourseffekten für Bekleidungsindustrie (chemisch reinigungsbeständig).

Als Anwendungsbeispiel für b) seien genannt : hellfarbige und schwarze Vulkanisate, die nach bekannten Methoden der Gummi- und Kabelindustrie hergestellt werden, z. B. Druckwalzen für das graphische Gewebe, Schläuche aller Art mit Festigkeitsträgern (verstärkt oder unverstärkt) für Kraftstoff- und Ölkontakt in der Fahrzeug- und Maschinenindustrie, unverstärkte und verstärkte Folien für technischen und Freizeitsektor (z. B. Schlauchboote), für zellige Artikel aller Art, z. B. zur Kälte- und Wärmeisolation, für Kabelisolationen und -mäntel, für Zubehör der Spinnindustrie, für Fördergurte u. a. mehr. Alle Anwendungen dieser Art nutzen den Vorteil der hervorragenden Ozon- und Wetterbeständigkeit der Polymergemische aus.

Zur Erzielung einer homogenen Polymerabmischung werden NBR und PVC entweder in Form fester Polymere oder in Form ihrer Polymerdispersionen (Latices) miteinander vermischt. Im Fall der Latex-Abmischungen, die naturgemäß zu einer hervorragenden Vorverteilung führen, erfolgt zunächst eine Coagulation und Aufarbeitung nach herkömmlichen Methoden zum festen Polymergemisch.

In beiden Fällen ist zur Erzielung einer homogenen Polymerphase (vollständige Löslichkeit der Polymere ineinander) eine mechanische Durchmischung oberhalb der Glastemperatur des PVC erforderlich (« Gelierung »). Unabhängig von der Vorstabilisierung des verwendeten NBR (fest oder Latex) ist für diesen Prozeß der einwandfreien Gelierung eine Wärmestabilisierung des PVC erforderlich, um eine Chlorwasserstoff-Abspaltung zu vermeiden und zu hellfarbigen, thermisch ungeschädigten Polymerabmischungen zu gelangen.

Es ist bekannt und auch Stand der Technik, daß als Wärmestabilisatoren für diese NBR/PVC-Verschnitte die üblichen wirksamen PVC-Stabilisatoren wie z. B. Barium-/Cadmium-Salze organischer Fettsäuren, organische Zinnverbindungen, Calcium-/Zink-Salz organischer Fettsäuren sowie Bleiverbindungen bekannter Art wirksam sind, jedoch bestimmte Nachteile in Bezug auf die Weiterverarbeitung und Anwendung solcher NBR/PVC-Verschnitte haben.

Generelle Nachteile in Latex-Abmischungen haben Stabilisatoren, die in Emulsion oder Dispersion in der schwach alkalischen Latex-Phase leicht hydrolysierbar sind und dabei ihre Wirksamkeit verlieren und als partiell oder vollverseifte Verbindungen ins Abwasser gelangen und hier zu unerwünschten Verunreinigungen führen.

Weiterhin besitzen die bekannten Stabilisatoren folgende Nachteile :

a) bei Barium/Cadmium-Salzen organischer Fettsäuren ist die Dispergierbarkeit in den notwendigen Dosierungen für Latexabmischungen problematisch. Vor allem wird jedoch das Vulkanisationsverhalten im Elastomersektor ungünstig beeinflußt und damit das Verarbeitungsverhalten harter Kautschukmischungen erschwert. Abgesehen davon ist die Toxikologie umstritten und in Gegenwart von Vulkanisationssystemen, die Schwefel enthalten, sind Verfärbungen, z. B. durch Cadmium nicht zu vermeiden.

b) Organische Zinnverbindungen sind zwar in geringen Mengen sehr wirksam, beeinflussen jedoch das Verarbeitungsverhalten der Kautschukmischungen durch ihren sehr beschleunigenden Eingriff in die Vulkanisationsreaktion. Ihr gravierender Nachteil liegt aber in ihrer Unbeständigkeit und Hydrolyseanfälligkeit bei der Anwendung des Latex-Verfahrens, bei dem der Stabilisator im emulgierten oder dispergierten Zustand bereits vor der Coagulation zugesetzt werden muß.

c) Calcium-/Zink-Salze organischer Fettsäuren haben den Nachteil geringer Wirksamkeit und führen besonders bei den Latexabmischungen zu verfärbten und damit unerwünschten Polymergemischen.

d) Bleiverbindungen lassen sich nicht allgemein anwenden, da sie in hellen Vulkanisaten in Gegenwart von Schwefel (Bestandteil des Vulkanisationssystems) sehr leicht zu Verfärbungen führen.

Es ist weiterhin bekannt, daß das Zinksalz des Mercaptobenzimidazols ein Antioxidationsmittel für Nitrilkautschuk ist (FR-A-2 419 306 und FR-A-2 445 350).

Es wurde nun gefunden, daß die geschilderten Nachteile der üblichen Stabilisatoren vermieden werden, wenn man bei der Herstellung von Nitrilkautschuk-PVC-Abmischungen Zinksalze der Mercaptobenzimidazole der Formel

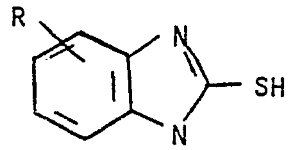

worin R Wasserstoff oder $C_1$-$C_4$, bevorzugt $C_1$-Alkyl darstellt, und/oder Zinksalze der Di-$C_1$-$C_9$-alkyldithiophosphate als Wärmestabilisatoren verwendet.

Überraschenderweise wurde bei der Verwendung dieser Verbindungen als Wärmestabilisatoren bei der Gelierung der Polymerverschnitte gefunden, daß ein Zusatz von weniger als 1 Gewichtsprozent (bezogen auf Polymerverschnitt) eine völlig ausreichende Stabilisierung für den Gelierprozeß ergibt, wobei eine sehr helle Eigenfarbe der Polymerverschnitte resultiert. Es wurde kein oder nur ein geringer Einfluß auf das Vulkanisationsverhalten und die Verarbeitbarkeit der Kautschukmischungen festgestellt. Als weiterer technischer Vorteil gegenüber beispielsweise Organo-Zinn-Verbindungen wurde eine ausgezeichnete Hydrolysebeständigkeit beobachtet, die eine Anwendung als Wärmestabilisator vorzugsweise für das Latex-Verfahren ermöglicht. Die Herstellung von Dispersion dieser Verbindungen bereitet keine Schwierigkeit, und auch bei längerer Lagerung der stabilisierten Latex-Abmischungen wird kein Absetzen des Stabilisators beobachtet, wie es bei anderen eingangs genannten Verbindungen auf Schwermetall-Basis der Fall ist.

Von den Zinksalzen der Mercaptobenzimidazole und der Dialkyldithiophosphate werden folgende Verbindungen bevorzugt eingesetzt:

Zinksalz des 2-Mercaptobenzimidazols

Zinksalz des 4 bzw. 5-Methyl-2-mercaptobenzimidazols

Zinksalz des Diethyldithiophosphates.

Die erfindungsgemäß einsetzbaren Zinksalze der Mercaptobenzimidazole bzw. Dialkylphosphate können in Mengen von 0,2 bis 1 Gew.-%, bevorzugt 0,4 bis 0,6 Gew.-% bezogen auf den Feststoffgehalt der Polymerabmischung NBR/PVC, zugegeben werden.

Die Polymerabmischung NBR/PVC kann 5 bis 80 Gew.-%, vorzugsweise 8 bis 70 Gew.-% eines Butadien-Acrylnitril-Kautschuks enthalten, der seinerseits 12 bis 48 Gew.-%, vorzugsweise 20-38 Gew.-% polymerisiertes Acrylnitril enthalten kann.

Der NBR Kautschuk besitzt vorzugsweise eine Mooney-Viskosität (100 °C) von 20 bis 140, speziell von 25 bis 60, kann jedoch auch in flüssiger Form eingesetzt werden.

Unter PVC sind nicht nur Polyvinylchlorid sondern auch die Copolymerisate zu verstehen, die Vinylchlorid einpolymerisiert enthalten, wie beispielsweise Copolymerisate mit Vinylidenchlorid, Vinylacetat, Ethylen, Propylen, Isobutylen, Vinylidenfluorid.

Die PVC-Polymerisate besitzen bevorzugt einen K-Wert von 50 bis 90, insbesondere 55 bis 75.

Die erfindungsgemäß einsetzbaren Verbindungen werden bevorzugt den Latex-Abmischungen von NBR und PVC zugesetzt. Diese Abmischung wird in üblicher Weise zum festen Polymerverschnitt aufgearbeitet und bei 120 bis 190 °C, vorzugsweise bei 150-170 °C zu einer homogenen Polymerphase geliert.

Die stabilisierte Polymerabmischung kann übliche weitere Zuschlagstoffe sowie Additive enthalten, wie z. B. synthetische Weichmacher auf Ester-, Ether- oder Thioetherbasis, Gleitmittel, Antiblockmittel, Lichtstabilisatoren, Füllstoffe, Antiflammittel, Vernetzungsmittel wie Schwefel und Beschleuniger. Die Mischungen können aber auch Coagentien für die Vernetzung durch Peroxide und energiereiche Strahlen wie mono- und mehrfunktionelle ungesättigte Ester der (Meth)-Acrylsäuren oder Alkylester von Di-, Tri- und Oligocarbonsäuren sowie Trialkylcyanurat oder Trialkylisocyanurat, 1,2-Polybutadiene und Bis-Maleiimide enthalten. Als Peroxide sind Dialkyl und Diaryl-Peroxide oder Peroxyester sowie Peroxyether verwendbar.

## Beispiel 1

Es wird unter Rühren ein Latex-Verschnitt hergestellt aus

A) einem Polyvinylchlorid-Latex in Emulsion nach dem heute üblichen Emulsionsverfahren. Das PVC hat einen K-Wert von 65 nach Fikentscher und wird nach den bekannten Methoden der PVC-Hersteller gewonnen.

B) einem Emulsionscopolymerisat aus 34 % Acrylnitril und 66 % Butadien, wie es technisch bei der Herstellung von Nitrilkautschuk anfällt (entgast, abgestoppt und gegen Luftsauerstoff stabilisiert). Der Nitrilkautschuk hat eine Mooney-Viskosität von 42 ME.

Das Verhältnis von A : B ist 35 : 65 kg, bezogen auf Feststoffgehalt. Die Latices können einen Feststoffgehalt zwischen 15 und 60 Gew.-% besitzen.

Zu diesem Latex-Verschnitt wird unter Rühren einer der beanspruchten Stabilisatoren für den späteren Gelierungsprozeß in Form einer Suspension C zugegeben und fein verteilt.

Die Suspension C wird unter Rühren hergestellt und enthält 6 kg kokosfettsaures Kalium in 30 l voll entsalztem Wasser. Darin werden 0,4 kg fein gemahlenes Zinksalz des 2-Mercaptobenzimidazols dispergiert.

Die Aufarbeitung des stabilisierten Latex-Verschnittes erfolgt nach den üblichen bekannten Methoden durch Koagulation mit Elektrolyten, wie Kochsalz, gelöst in 40-60 °C heißem Wasser, Waschen und Trocknen des Feststoffes. Anschließend wird auf einer Walze oder in einem Gelier-Extruder nach den bekannten Gelierungsverfahren bei Temperaturen von 160° 10 min geliert. Nach dem Abkühlen erhält man einen homogenen, hellen bis hellbeigen, gelfreien Kautschuk mit einer Defo-Härte von ca. 8 000.

In einer Kautschuk-Prüfmischung aus

100 Gewichts-Teilen des Polymer-Verschnittes
0,5 Gewichts-Teilen Stearinsäure
5 Gewichts-Teilen Zinkoxid
40 Gewichts-Teilen HAF-Ruß
5 Gewichts-Teilen eines Klebrigmachers[1)]
0,9 Gewichts-Teilen eines Sulfenamid-Beschleunigers[2)]
1,5 Gewichts-Teilen Schwefel

zeigt eine solchermaßen hergestellte Mischung einen Mooney-Scorch bei 120 °C ($MS/t_5$) von 47 Minuten. Die Mischungsherstellung ist im Handbuch für die Gummi-Industrie auf Seite 97 (Herausgeber: BAYER AG) beschrieben.

Verwendet man in o. g. Rezeptur anstelle des HAF-Rußes einen hellen Füllstoff, z. B. 30 Teile einer gefällten Kieselsäure, so erhält man ein helles Vulkanisat ohne Verfärbungen.

Beispiel 2

Es wird wie nach Beispiel 1 gearbeitet, jedoch als Stabilisator für die Stabilisierung des Polyvinylchlorid-Anteiles 0,4 kg des Zinksalzes von 4-Methyl-2-mercaptobenzimidazol (bei technischen Produkten wird meistens Zinksalz der Gemische aus 4 und 5-Methylmercaptobenzimidazols) verwendet.

Man erhält praktisch das gleiche Resultat wie in Beispiel 1 angegeben. Der Mooney-Scorch der Rußmischung liegt bei 46 Minuten.

Beispiel 3 (Vergleichsbeispiel)

Es wird wie nach Beispiel 1 gearbeitet, nur verwendet man einen handelsüblichen PVC-Stabilisator auf Basis Dibutyl-Zinn-dithioglykolatestern einer Menge von 0,4 kg. Es wird ein ebenso helles wie gelfreies Material erhalten wie im Beispiel 1 beschrieben, jedoch schwanken die Anvulkanisationswerte der daraus hergestellten Kautschukmischung infolge partieller Verseifung des Stabilisators sehr stark. Man findet für den $MS/t_5$ bei 120 °C beispielsweise Werte von 35'. Wiederholt man den Versuch so wird ein Endprodukt erhalten, das in der Kautschukmischung eine Anvulkanisationszeit nach Mooney ($MS/t_5$) von 67 Minuten bei 120 °C ergibt.

Beispiel 4 (Vergleichsbeispiel)

Es wird wie nach Beispiel 1 gearbeitet und als Wärme-Stabilisator das Zinksalz des 2-Mercaptobenzothiazols verwendet (0,4 kg). Als Resultat erhält man zwar einen noch recht hellen und gelfreien Kautschuk, jedoch sehr niedrige Werte von 8 Minuten für die Anvulkanisation nach Mooney ($MS/t_5$) bei 120 °C. Diese Verbindungsklasse ist aufgrund seiner stark beschleunigenden Wirkung auf die Vulkanisation nicht brauchbar, da die Verarbeitbarkeit eingeschränkt wird und die notwendige Verarbeitungssicherheit nicht gegeben ist.

Beispiel 5

Es wird wie nach Beispiel 1 gearbeitet. Als Wärmestabilisator wird jedoch eine Suspension nach C

[1)] verwendet wurde (R) Vulkanol FH, Hersteller BAYER AG, Leverkusen
[2)] verwendet wurde (R) Vulkacit CZ, Hersteller BAYER AG, Leverkusen

unter Rühren hergestellt, die 0,4 kg des Zinksalzes des Diethyldithiophosphates enthält. Man erhält nach der Aufarbeitung und Gelierung (10' 160 °C) ein ebenfalls homogenes, helles Polymergemisch mit ähnlichen Eigenschaften wie unter Beispiel 1 beschrieben. Die Anvulkanisationszeit nach Mooney beträgt 50 Minuten.

Die Vulkanisate mit hellen Füllstoffen, beispielsweise mit 30 Teilen einer gefällten Kieselsäure, sind nicht verfärbt.

Beispiel 6

Es wird ein Latex-Verschnitt analog Beispiel 1 hergestellt, jedoch wird das Verhältnis des Feststoffgehaltes auf 30 Gew.-Teile PVC und 70 Gew.-Teile eines Nitrilkautschuks mit 28 % Acrylnitrilgehalt (Mooney-Viskosität von 36 ME, technisch aufbereitetes Emulsions-Copolymerisat) eingestellt. In gleicher Weise wie unter Beispiel 1 beschrieben, wird eine Suspension von 0,4 kg des Zinksalzes von 2-Mercaptobenzimidazol innig mit dem Latex-Verschnitt vermischt, dann koaguliert, gewaschen und getrocknet. Die Gelierung wird in bekannter Art 10' bei 160 °C durchgeführt. Nach dem Abkühlen in Wasser erhält man einen Festkautschuk mit einer Defo-Härte von 5 000 bis 8 000 und einer Mooney-Viskosität von 74 ME. Das Material ist hellbeige gefärbt, homogen und zeigt in der Ultrazentrifuge in Cyclohexanon keinen Gelgehalt.

Auswirkungen der verwendeten chem. Substanzen auf die Mooney-Scorch-Zeiten der Rußmischungen (vgl. Prüfmischung auf S. 10)

| Beispiel | Chem. Verbindung | Farbe der Verschnitte | Mooney-Scorch-Zeit (min) |
|---|---|---|---|
| 1 | Zinksalz des 2-Mercaptobenzimidazols | gelb | 47 |
| 2 | Zinksalz des 4-Methyl-2-mercaptobenzimidazols | hellgelb | 46 |
| 3 | Dibutyl-Zinn-dithioglycolatester | hellgelb | 35 bis 67 |
| 4 | Zinksalz des 2-Mercaptobenzthiazols | gelb | 8 |
| 5 | Zinksalz des Diethyl-dithiophosphates | gelb | 50 |
| 6 | Zinksalz des 2-Mercaptobenzimidazols | gelb | 44 |

**Patentansprüche**

1. Verwendung von Zinksalzen des Mercaptobenzimidazols der Formel

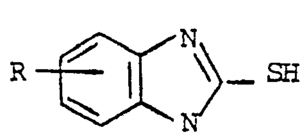

in der R Wasserstoff oder $C_1$-$C_4$ Alkyl darstellt und/oder einem Zinksalz des Di-$C_1$-$C_9$-alkyldithiophosphates als Wärmestabilisatoren bei der Herstellung von Nitrilkautschuk-PVC-Abmischungen.

2. Verwendung gemäß Anspruch 1 in Mengen von 0,2 bis 1 Gew.-%, bezogen auf Feststoffgehalt der Polymerabmischungen.

3. Verwendung gemäß Anspruch 1 in Mengen von 0,4 bis 0,6 Gew.-%, bezogen auf Feststoffgehalt der Polymerabmischung.

4. Verwendung gemäß Anspruch 1 von Zinksalzen des 2-Mercapto-, 4-Methyl-2-mercapto-, 5-Methyl-2-mercaptobenzimidazols und/oder des Diethyldithiophosphates.

5. Verwendung gemäß Ansprüchen 1-4, wobei die Polymerabmischung 5 bis 80 Gew.-% eines Nitrilkautschukes mit einem Acrylnitrilgehalt von 12 bis 48 Gew.-% enthält.

6. Verwendung gemäß Ansprüchen 1-5, wobei der Nitrilkautschuk eine Mooney-Viskosität (100 °C) von 20 bis 140 aufweist.

7. Verwendung gemäß Ansprüchen 1-5, wobei das PVC einen K-Wert von 50 bis 90 aufweist.

**Claims**

1. Use of zinc salts of mercaptobenzimidazole of the formula

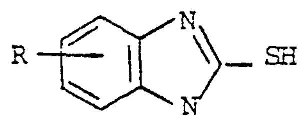

in which R represents hydrogen or $C_1$-$C_4$-alkyl and/or a zinc salt of di-$C_1$-$C_9$-alkyldithiophosphate as heat stabilisers in the production of nitrile rubber/PVC mixtures.

2. Use according to Claim 1 in quantities of 0.2 to 1 % by weight, based on the solids content of the polymer mixtures.

3. Use according to Claim 1 in quantities of 0.4 to 0.6 % by weight, based on the solids content of the polymer mixture.

4. Use according to Claim 1 of zinc salts of 2-mercapto-, 4-methyl-2-mercapto-, 5-methyl-2-mercaptobenzimidazole and/or of diethyldithiophosphate.

5. Use according to Claims 1-4, the polymer mixture containing 5 to 80 % by weight of a nitrile rubber having an acrylonitrile content of 12 to 48 % by weight.

6. Use according to Claims 1-5, the nitrile rubber having a Mooney viscosity (100 °C) of 20 to 140.

7. Use according to Claims 1-5, the PVC having a K-value of 50 to 90.

**Revendications**

1. Utilisation de sels de zinc du mercaptobenzimidazole de formule

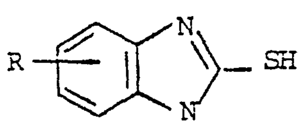

dans laquelle R représente l'hydrogène ou un groupe alkyle en $C_1$-$C_4$ et/ou d'un sel de zinc du dithiophosphate de dialkyle en $C_1$-$C_9$ comme stabilisants thermiques dans la fabrication de mélanges caoutchouc nitrile-PVC.

2. Utilisation selon la revendication 1 en quantités de 0,2 à 1 % en poids, par rapport à la teneur en solides des mélanges de polymères.

3. Utilisation selon la revendication 1 en quantités de 0,4 à 0,6 % en poids, par rapport à la teneur en solides du mélange de polymères.

4. Utilisation selon la revendication 1 de sels de zinc du 2-mercapto-, 4-méthyl-2-mercapto- ou 5-méthyl-2-mercaptobenzimidazole et/ou du dithiophosphate de diéthyle.

5. Utilisation selon la revendication 1-4, caractérisée en ce que le mélange de polymères contient 5 à 80 % en poids d'un caoutchouc nitrile ayant une teneur en acrylonitrile de 12 à 48 % en poids.

6. Utilisation selon les revendications 1-5, caractérisée en ce que le caoutchouc nitrile présente une viscosité Mooney (à 100 °C) de 10 à 140.

7. Utilisation selon les revendications 1 à 5, caractérisée en ce que le PVC présente une valeur K de 50 à 90.